# EUROPÄISCHE PATENTSCHRIFT

(11) **EP 3 131 080 B1**
(45) Veröffentlichungstag und Bekanntmachung des Hinweises auf die Patenterteilung: **13.05.2020**
(21) Anmeldenummer: 16181465.2
(22) Anmeldetag: 27.07.2016
(51) Int. Cl.: G08C 17/02

(54) **FAHRZEUG ZUR BEFÖRDERUNG VON PERSONEN UND ORIENTIERUNGSHILFE**
VEHICLE FOR THE TRANSPORTATION OF PERSONS AND ORIENTATION AID
VEHICULE DE TRANSPORT DE PERSONNES ET AIDE A L'ORIENTATION

(30) Priorität: 12.08.2015 DE 102015113317
(43) Veröffentlichungstag der Anmeldung: 15.02.2017
(73) Patentinhaber: Bombardier Transportation GmbH, 10785 Berlin (DE)
(72) Erfinder: Kirchner, Hans-Joachim, 13503 Berlin (DE)
(74) Vertreter: Zimmermann & Partner Patentanwälte mbB

(56) Entgegenhaltungen:
- US-A- 5 838 238
- US-A1- 2010 176 953
- US-B1- 6 473 704

## Beschreibung

### Technisches Gebiet

Die vorliegende Erfindung betrifft ein Fahrzeug zur Personenbeförderung, insbesondere ein Schienenfahrzeug oder einen Bus, und eine tragbare Orientierungshilfe für Passagiere des Fahrzeugs, insbesondere für Sehbehinderte und Blinde.

### Vorbekannter Stand der Technik

Vorrichtungen, die es Blinden und Sehbehinderten erleichtern, sich im Alltag zurechtzufinden werden seit längerer Zeit verwendet. Dazu gehören ertastbare Markierungen auf Gehwegen und mit akustischen Sendern ausgerüstete Verkehrsampeln und Fahrzeuge.

So beschreibt die Die CH 697 266 B1 eine elektronische Vorrichtung zur Hilfeleistung auf Straßen, in öffentlichen Räumen und in öffentlichen Verkehrsmitteln für Benutzer wie Blinde und Sehbehinderte. Die Vorrichtung beinhaltet ein tragbares Benutzergerät mit Eingabemitteln zur Eingabe von Information durch einen Benutzer, akustische und/oder taktile Ausgabemittel zur Ausgabe von Information an den Benutzer und benutzerseitige Funkmittel zum Senden und Empfangen von Funksignalen. Ferner beinhaltet die elektronische Vorrichtung mehrere Objektgeräte, die zur Installation an jeweils einem Objekt in einer Umgebung des Benutzers geeignet sind, mit jeweiligen Speichermitteln zum Speichern von Information und mit den Speichermitteln verbundenen objektseitigen Funkmitteln zur bidirektionalen Funkkommunikation mit den benutzerseitigen Funkmitteln.

Die FR 2971353 A1 beschreibt eine Schallverstärkervorrichtung zum Lokalisieren einer Zugangstür eines Fahrzeugs in öffentlichen Verkehrsmitteln mit Hilfe eines Funkwellensenders. Die Schallverstärkervorrichtung weist eine CPU auf und ist mit einer on-board-Vorrichtung des Fahrzeugs verbunden, um Informationen über den Bewegungszustand des Fahrzeugs und den Öffnungszustand einer Eingangstür des Fahrzeugs zu empfangen. Die CPU sendet Befehle an einen Lautsprecher, wobei die Befehle vom Empfang oder Nichtempfang von Radiowellen eines vordefinierten Typs mit einem Funkwellenempfänger der Schallverstärkervorrichtung und den von der on-board-Vorrichtung erhaltenen Informationen abhängt.

Die US 5838238 A beschreibt ein Gerät, das Sehbehinderten hilft, insbesondere ein System zur Warnung blinder oder sehbehinderter Reisender vor einem potenziell gefährlichen Bereich nahe einer Kante von Eisenbahnbahnsteigen. Dazu weist ein Infrarot integriertes Anzeigesystem eine Anordnung von optischen Emittern und einen tragbaren Detektor bzw. eine Warnvorrichtung für sehbehinderte Nutzer auf. Die Emitter erzeugen einen Infrarot-Lichtstrahl, der einen Abschnitt der Plattform nahe der Bahnsteigkante überstreicht. Wenn sich ein sehbehinderter Reisender in den Infrarot-Lichtstrahl bewegt, wird ein erster Anzeiger bzw. Sensor in der Warnvorrichtung aktiviert und Audio- oder taktile Reize, warnen den sehbehinderten Reisenden vor dem Betreten des Gefahrenbereichs. Ein zweiter Anzeiger liefert eine zusätzliche Bestätigung an den sehbehinderten Reisenden, dass die Türen zum Einsteigen geöffnet sind.

Die US 6473704 B1 beschreibt ein Informationsdienstsystem umfassend eine tragbare Einheit, die von dem Benutzer getragen wird, und eine Identifikationsmarkierung zum Liefern von Informationen über die gegenwärtige Position des Benutzers oder eines Ortes, der sich der Benutzer nähert. Die Identifikationsmarkierung überträgt die Übertragungsinformation einschließlich der spezifizierten Information, die im Voraus per Infrarotlicht übertragen wurde. Die tragbare Einheit, die einen vorbestimmten Bereich der Identifikationsmarkierung erhalten hat, demoduliert bei Erhalt die spezifizierte Information und gibt die spezifizierte Information über eine Informationsausgabeeinheit wie einen Lautsprecher aus.

Die FR 2945635 A1 beschreibt ein Positionierungssystem für Personen in einem Gebäude mit einer Vielzahl von Transpondern an festen Positionen und einer tragbaren Vorrichtung für Personen, die anhand der berechneten Position eines Nutzers akustische Signale zum Führen des Nutzers ausgibt.

Die US 20100176953 A1 beschreibt ein Orientierungssystem für einen sehbehinderten Benutzer, das eine Basisstation und einen Handapparat aufweist. Die Basisstation ist nahe an einem Gegenstand angebracht, zu dem der Benutzer sich orientieren möchte. Die Basisstation ist so konfiguriert, dass sie einen Strahl emittiert, der nicht in der Lage ist, feste Gegenstände zu durchdringen und eine Mittellinie aufweist. Der Handapparat ist so konfiguriert, dass er den Strahl detektiert und eine Ausgabe erzeugt, den der Benutzer verwenden kann, um die Kanten des Strahls zu bestimmen und sich somit etwa mit der Mittellinie zu orientieren.

Darüber hinaus werden Orientierungs- bzw. Assistenzsysteme verbreitet zur Unterstützung von Kraftfahrzeugführern, aber auch im Freizeitbereich, z.B. beim Joggen eingesetzt.

So beschreibt die DE 20 2004 021 078 U1 eine auch für ältere, sehbehinderte oder blinde Benutzer geeignete Vorrichtung zur integrierten Steuerung und Nutzung von Informations- und/oder Unterhaltungseinrichtungen mit einer tragbaren Teileinheit, welche eine akustische Ausgabeeinrichtung, eine erste Sende- und/oder Empfangseinrichtung, eine Energieversorgungseinrichtung und eine Steuerungseinrichtung aufweist, und als tragbares Navigationsgerät mit Sprachausgabe auch beim Wandern oder Skilanglauf eingesetzt werden kann. Dadurch, dass der Benutzer der Vorrichtung die Informationen akustisch dargeboten bekommt, wird seine Aufmerksamkeit nicht durch das Ablesen optischer Anzeigen beeinträchtigt.

Die DE 10 2005 032 528 A1 beschreibt sogenannte Manöverassistenzsysteme, insbesondere Navigationssysteme und Einparkhilfen, und ein Verfahren zum Liefern von assistierenden Informationssignalen an einen Benutzer, wobei die assistierenden Informationssignale mittels einer mit dem Manöverassistenzsystem koppelbaren Haptikeinrichtung als haptische Informationssignale an den Benutzer geliefert werden.

### Nachteile des Standes der Technik

Nachteil sämtlicher bisher bekannten Lösungen ist, dass sie Blinden und Sehbehinderten zwar eine generelle Hilfe bei der Orientierung bieten, das Auffinden einer Tür eines bereitstehenden Fahrzeugs der Personenbeförderung durch Blinde bzw. Sehbehinderte wird jedoch nur unzureichend unterstützt.

So warnt die US 5838238 A einen blinden bzw. sehbehinderten Passagier vor gefährlichen Bereichen und informiert ihn, wenn er vor geöffneten Türen eines Fahrzeugs steht. Der Passagier muss aber selbst zu einer geöffneten Tür finden, was für einen Blinden bzw. Sehbehinderten ohne weitergehende Unterstützung sehr schwierig und entsprechend zeitaufwendig sein kann.

### Problemstellung

Aufgabe der vorliegenden Erfindung ist es, Blinden und Sehbehinderten auf eine einfache und zuverlässige Weise das Auffinden einer Tür, insbesondere einer einstiegsbereiten Tür eines Fahrzeugs der Personenbeförderung zu erleichtern.

### Erfindungsgemäße Lösung

Die obige Aufgabe wird durch ein Fahrzeug nach Anspruch 1, eine tragbare Orientierungshilfe nach Anspruch 9 und ein Passagierleitsystem nach Anspruch 15 gelöst.

Gemäß einer Ausführungsform weist ein Fahrzeug zur Beförderung von Passagieren einen Innenraum zur Aufnahme der Passagiere, einen Türbereich zum Betreten und Verlassen des Innenraums, und einen im und/oder am Türbereich angeordneten Sender, typischerweise einen elektromagnetischer Sender im Radiofrequenzbereich, auf, der eingerichtet ist, ein elektromagnetisches Signal auszusenden, in dem eine individuelle Kennung des Türbereichs und eine Sendeleistung des Senders kodiert sind.

Bei dem Fahrzeug kann es sich um einen im öffentlichen Personennahverkehr Regionalverkehr, und / oder Fernverkehr einsetzbaren Bus oder ein derartiges Schienenfahrzeug, z.B. eine Straßenbahn, eine U-Bahn, eine S-Bahn, ein Nahverkehrszug oder einen Fernverkehrszug, handeln.

Der Begriff "Türbereich" wie er vorliegend verwendet wird, soll einen Bereich des Fahrzeugs beschreiben, der an eine Tür des Fahrzeugs zu einem Innenraum, d.h. eine Fahrgastraumtür, angrenzt und die Tür umfassen kann. Dabei handelt es sich typischerweise um einen unmittelbar an die Tür angrenzenden Bereich, dessen Abstand zur Tür typischerweise maximal ein Meter, noch typischer maximal 50 cm beträgt. Bei der Tür kann es sich auch um eine Doppeltür handeln.

Typischerweise ist der Sender in einer seitlichen Ansicht von außen auf den Türbereich in Längsrichtung des Fahrzeugs und / oder in einer Aufsicht auf das Fahrzeug von oben zumindest in Längsrichtung des Fahrzeugs mittig angeordnet. Diese Anordnung erleichtert das Lokalisieren und Auffinden der Tür mittels einer tragbaren Orientierungshilfe.

Beispielsweise kann der Sender in der seitlichen Ansicht von außen auf den Türbereich in Längsrichtung des Fahrzeugs mittig und in einem oberen Abschnitt des Türbereichs, z.B. oberhalb der Tür angeordnet sein. Dadurch können Signalschwächungen durch andere Personen, die sich zwischen der tragbaren Orientierungshilfe und der Tür befinden, zumindest verringert werden.

Typischerweise ist der Sender außen am Fahrzeug angebracht und / oder in einer nach außen offenen Öffnung oder Vertiefung einer äußeren Verkleidung des Fahrzeugs angeordnet. Dadurch wird eine verlustarme Abstrahlung des elektromagnetischen Signals auch bei geschlossenem Türbereich (geschlossener Tür(en)) gewährleistet.

Der Sender ist zu Erhöhung der Sicherheit typischerweise mit einer Steuerung des Fahrzeug verbunden, die den Sensor steuert. Dabei kann vorgesehen sein, dass die Steuerung den Sender während einer Fahrt des Fahrzeugs, und / oder kurz vor der Fahrt bei schon geschlossenem und / oder sich schließenden Türbereich deaktiviert, und / oder den Sender während eines Halts des Fahrzeugs zum Aussenden des elektromagnetischen Signals zu veranlassen.

Gemäß einer Ausführungsform weist eine tragbare Orientierungshilfe, eine Ausgabeeinheit und eine mit der Ausgabeeinheit verbundene Empfangs- und Steuereinheit auf, die eingerichtet ist, ein elektromagnetisches Signal eines Fahrzeugs zu detektieren, eine in dem elektromagnetisches Signal kodierte individuelle Kennung eines Türbereichs des Fahrzeugs zu dekodieren, und nach dem Dekodieren der individuelle Kennung die Ausgabeeinheit zum Ausgeben eines Signals zu veranlassen, das eine auf das Fahrzeug wartende und mit der tragbaren Orientierungshilfe ausgerüstete Person (im Folgenden auch als Passagier bezeichnet) auf den Türbereich hinweist. Die Empfangs- und Steuereinheit ist eingerichtet, durch ein Auswerten des elektromagnetischen Signals eine Entfernung zu dem Türbereich zu ermitteln.

Wenn sich ein mit der tragbaren Orientierungshilfe ausgerüsteter Passagier in der Nähe, z.B. auf einem Bahnsteig, eines wartenden Fahrzeugs befindet, dessen Sender bei Einstiegsbereitschaft des Fahrzeugs ein die individuelle Kennung eines Türbereichs kodierendes Signal aussendet, so kann der Passagier von der tragbaren Orientierungshilfe auf den Türbereich hingewiesen werden. Dies erfolgt typischerweise durch von der Ausgabeeinheit der tragbaren Orientierungshilfe, bspw. einer Wandlereinheit, ausgegebene akustische Signale und / oder taktil wahrnehmbare Signale, insbesondere Vibrationssignale.

Auf diese Weise kann auch ein blinder bzw. sehbehinderter Passagier auf den Türbereich hingewiesen werden und erst danach mit der Suche nach dem Türbereich beginnen. Dadurch kann die Suchzeit verringert werden.

Da im Signal die individuelle Kennung des Türbereichs kodiert ist, kann die tragbare Orientierungshilfe bei entsprechend hinterlegten Informationen, z.B. in Form einer Datenbank in einem Speicherbereich der tragbaren Orientierungshilfe, dem Passagier auch weitere Informationen zu dem wartenden Fahrzeug übermitteln, z.B. um welches Fahrzeug es sich handelt und / oder welche Strecke das Fahrzeug bedient. Dies ermöglicht, dass ein blinder bzw. sehbehinderter Passagier erst dann mit der Suche nach einer Tür beginnt, wenn es sich um eine Tür eines Fahrzeugs handelt, dass eine von ihm gewünschte Zielstation oder Umsteigestation anfährt. Dadurch kann vermieden werden, dass ein Blinder oder Sehbehinderter versehentlich in ein Fahrzeug einsteigt, dass ihn nicht zum gewünschten Ziel oder Umsteigemöglichkeit bringt, z.B. in einen Bus einer nichtgewünschten Buslinie. Zudem kann dadurch die Suchzeit weiter verringert werden.

Typischerweise ist die Empfangs- und Steuereinheit eingerichtet ist, durch Auswertung des mit einem entsprechenden Empfänger detektierten elektromagnetischen Signals des Senders an zwei oder mehr Orten eine Richtung zum Türbereich zu ermitteln. Dies kann bspw. über die Bestimmung eines Gradienten bzw. einer Differenz der Stärke des elektromagnetischen Signals, z.B. einer elektrischen Feldstärke erfolgen. Dazu bedarf es nur einer typischerweise geringfügigen Bewegung der tragbaren Orientierungshilfe, z.B. einer Bewegung der tragbaren Orientierungshilfe mit der Hand oder einer langsamen Gehbewegung des Nutzers der tragbaren Orientierungshilfe.

Dies ermöglicht dem blinden oder sehbehinderten Nutzer, die Tür mit Hilfe der tragbaren Orientierungshilfe zuverlässig in kurzer Zeit, ggf. sogar auf dem kürzesten Weg zu erreichen.

Im Vergleich zu einer Orientierungshilfe beim Einsteigen auf Basis akustischer Signale, die vom Türbereich emittiert werden, kann eine höhere Zuverlässigkeit bzw. eine höherer Komfort für Sehbehinderte und Blinde erzielt werden, für die die Orientierung anhand akustischer Signale von Türbereichen in der zumindest zeitweise lauten Umgebung (Stationsdurchsagen, Ein/Ausfahrten anderer Fahrzeuge, laute weitere Fahrgäste) sehr schwer sein kann.

Da auf ein Aussenden akustischer Signale durch den geöffneten Türbereich verzichtet werden kann, werden andere Fahrgäste sowie Anwohner durch die vorgeschlagene Lösung zudem nicht oder allenfalls geringfügig beeinträchtig.

Typischerweise kann die Ausgabeeinheit der tragbaren Orientierungshilfe dazu akustische und/oder taktil wahrnehmbare Signale ausgeben, die dem Träger ein Annähern an bzw. ein Entfernen vom Sender anzeigen. Beispielsweise kann die tragbare Orientierungshilfe eine Signalfolge ausgeben, deren Signalabstände bei Annäherung an den Sender und damit die Tür kürzer und bei Entfernung von der Tür länger werden.

In anderen Ausführungsbeispielen erhöht die tragbare Orientierungshilfe bei sich verringernden Abstand zum Sender und damit zur Tür eine Lautstärke und/oder ein Grundfrequenz eines ausgegeben Tonsignals.

Gemäß einem Ausführungsbeispiel werden von der tragbaren Orientierungshilfe alternativ oder ergänzend verbale Informationen zur einzuschlagenden und / oder beizubehaltenden Richtung ausgegeben.

Um weiter Fahrgäste möglichst wenig zu beeinträchtigen, kann vorgesehen sein, dass die tragbare Orientierungshilfe akustische Signale über Kopfhörer an den Nutzer ausgibt.

Typischerweise ist die Empfangs- und Steuereinheit weiterhin eingerichtet, durch Auswertung des mit dem Empfänger detektierten elektromagnetischen Signals des Senders einen Abstand zu dem Sender und damit zum Türbereich bzw. der Tür zu ermitteln. Dies kann bspw. über die Bestimmung der Stärke des elektromagnetischen Signals (im Folgenden auch als Signalstärke bezeichnet), z.B. der elektrischen Feldstärke erfolgen.

In einem Ausführungsbeispiel sind im elektromagnetischen Signal des Senders zusätzlich der Sendertyp und/oder seine Sendeleistung und ggf. weitere Abstrahlcharakteristiken kodiert. Aus der lokal gemessenen Stärke des elektromagnetischen Signals und der Sendeleistung kann die Empfangs- und Steuereinheit den jeweiligen Abstand zum Sender berechnen.

In einem weiteren Ausführungsbeispiel werden die Türbereiche der Fahrzeuge mit Sendern gleicher, ggf. standardisierter Sendeleistung oder zumindest mit einer geringen Leistungsschwankung von weniger als 5%, oder sogar weniger als 2% voneinander ausgerüstet. Zur Berechnung des Abstandes kann die Empfangs- und Steuereinheit in diesem Ausführungsbeispiel von einer gegebenen Sendeleistung ausgehen.

Der typischerweise wiederholt, z.B. in regelmäßigen Abständen, berechnete Abstand zum Sender kann ergänzend oder alternativ zur Bestimmung des Gradienten bzw. der Differenz der Signalstärke des Senders zum Bestimmen der von der Ausgabeeinheit auszugebenden Signale verwendet werden.

Die Bestimmung des Anstandes zum Sender ermöglicht es auch, dem Nutzer genau mitzuteilen, wenn er unmittelbar vor dem Türbereich angekommen ist. In dieser Situation kann von der tragbaren Orientierungshilfe z.B. ein Dauersignal ausgegeben werden.

Der blinde oder sehbehinderte Nutzer weiß dann zuverlässig, dass er nun mit einer Stufe rechnen muss, wodurch das Verletzungsrisiko und / oder die Einstiegszeit reduziert werden kann.

Außerdem kann im elektromagnetischen Signal des Senders zusätzlich kodiert sein, ob der Türbereich geöffnet werden kann oder ob er bereits geöffnet ist.

Wenn der Nutzer unmittelbar vor dem Türbereich angekommen ist und der Türbereich zum Einsteigen noch zu öffnen ist, kann der Nutzer von der tragbaren Orientierungshilfe darauf hingewiesen werden.

Nach dem Aufbau einer typischerweise bidirektionalen Verbindung zwischen der tragbaren Orientierungshilfe und dem Türbereich, kann das Öffnen des Türbereichs auch von der tragbaren Orientierungshilfe veranlasst werden, z.B. wenn der Nutzer in der Nähe des Türbereichs angekommen ist.

Beispielsweise kann der Sender von einem Sende-Empfangsmodul des Türbereichs bereitgestellt werden. So kann der Sender von einem ein Bluetooth-Modul oder einem WLAN-Modul des Türbereichs bereitgestellt werden, und die Empfangs- und Steuereinheit der tragbaren Orientierungshilfe ein entsprechendes Bluetooth-Modul bzw. ein WLAN-Modul aufweisen.

Es ist jedoch auch möglich, dass der Sender im Türbereich und der darauf abgestimmte Empfänger der tragbaren Orientierungshilfe andere Frequenzen bzw. Frequenzbänder nutzen, z.B. bei 27 MHz oder im Terahertzbereich.

Zwar kann prinzipiell auch mit noch höherfrequenten Signalen, z.B. Infrarotsignalen gearbeitet werden, dabei ist aber mit einer im Vergleich zum Radiofrequenzbereich deutlich reduzierten Zuverlässigkeit zu rechenen, da die Gefahr der Signalschwächung oder sogar Signalunterbrechung durch zusätzliche Personen im Infrarotbereich wesentlich höher ist. Zudem arbeiten Infrarot-Empfangselemente häufig nur dann ausreichend gut, wenn sie gut auf den Infrarotsender ausgerichtet sind. Dies kann die Bedienung durch Blinde bzw. Sehbehinderte erschweren.

Die Berechnung des Abstands zwischen der tragbaren Orientierungshilfe und Sendern bzw. der Vergleich der gemessenen Signalstärke von Sendern verschiedener Türbereich, die auf der im jeweiligen ausgesandten elektromagnetischen Signal kodierten individuelle Kennung von der tragbaren Orientierungshilfe unterschieden werden können, ermöglicht es zudem, einen nächstgelegenen Türbereichs von typischerweise mehreren Türbereichen des Fahrzeugs zu ermitteln und den Nutzer zu diesem zu führen.

Typischerweise werden die Türbereichen zugeordneten Sender von sogenannten Bluetooth hotspot, d.h. eine Funkzelle auf Basis der Bluetooth-Technik, bereitgestellt, mit dem ein Bluetooth-Modul der Empfangs- und Steuereinheit der tragbaren Orientierungshilfe kommunizieren kann. In diesem Ausführungsbeispiel wird das Bluetooth-Modul der Empfangs- und Steuereinheit typischerweise automatisch eine Verbindung zum nächstgelegenen Bluetooth hotspot (und damit zum nächstgelegenen Türbereich) des Fahrzeugs aufbauen.

Der Bluetooth hotspot kann einer der Leistungsklassen 1 bis 3 angehören. Dies kann aber vom Fahrzeugtyp abhängen. So kann die Leistungsklasse 3 (1 mW Sendeleistung) für Busse und die typischerweise kleinen Haltestellenbereiche von Bussen ausreichend sein, für Züge mit mehreren Waggons aber eine höhere Sendeleistung wünschenswert sein.

Für Züge mit mehreren Waggons (Personenwagen) kann zudem vorgesehen sein, dass im elektromagnetischen Signal zusätzlich eine Wagenkennung kodiert ist. Die Dekodierung und Weitergabe dieser Information an den Nutzer, ermöglicht es ihm zu entscheiden, ob er in den vor ihm befindlichen Waggon oder einen anderen Waggon, für den er bspw. einen Sitzplatz gebucht hat, einsteigen möchte. Wenn die tragbare Orientierungshilfe zusätzlich über ein Spracherkennungsmodul verfügt, kann ein blinder oder sehbehinderter Nutzer, die tragbare Orientierungshilfe sogar per Spracheingabe auffordern, ihn zu einem seinem Sitzplatz möglichst nahe gelegenen Türbereich zu führen.

Gemäß einer Weiterbildung handelt es sich bei der tragbare Orientierungshilfe um einen persönlichen digitalen Assistenten (PDA, Personal Digital Assistant, d.h. einen kompakten, tragbarer Computer, z.B. einen sogenannte Tabletcomputer) oder ein Smartphone, indem typischerweise die Funktionen eines PDAs und eines Mobiltelefons vereinigt sind.

PDAs und Smartphones sind weitverbreitet und verfügen zudem typischerweise schon über ein Bluetooth-Modul und ein WLAN-Modul. Über eine in einen Speicherbereich ladbare Anwendungssoftware (insbesondere eine mobile App, d.h. eine Anwendungssoftware für Mobilgeräte bzw. mobile Betriebssysteme), die im Betrieb auf einen Datenstrom des Bluetooth-Moduls (bzw. WLAN-Moduls) zugreifen, darin die individuelle Kennung des Türbereichs dekodieren, und die eine akustische Ausgabeeinheit (z.B. einen internen oder per Kopfhörer angeschlossenen elektroakustischen Wandler) und/oder einen Vibrationsmotor des PDAs bzw. Smartphones ansteuern kann, können auch beim Nutzer bereits vorhandene Geräte mit der gewünschten Funktionalität der Orientierungshilfe beim Einsteigen ausgestattet werden.

Moderne Smartphones haben zudem typischerweise weitere Sensoren, wie z.B. Bewegungs- und / oder Beschleunigungssensoren und /oder sogar ein GPS-Modul (von engl. Global Positioning System, auf die die Anwendungssoftware im Betrieb gemäß Ausführungsbeispielen zugreifen kann und mit deren Hilfe die Genauigkeit und / oder Zuverlässigkeit der Bestimmung der Entfernung zwischen Sender und tragbarer Orientierungshilfe und /oder der Bestimmung der Richtung, in der sich der Sender des Türbereichs von der tragbaren Orientierungshilfe und damit vom Nutzer aus betrachtet befindet, erhöht werden kann.

Mit dem beschriebenen Fahrzeug(en) und der tragbaren Orientierungshilfe kann ein Passagierleitsystem aufgebaut werden, dass das Einsteigen für Blinde und Sehbehinderten erheblich vereinfacht.

Optional kann das Passagierleitsystem einen Server mit einer Datenbank mit den individuellen Kennungen von Türbereichen und / oder weiteren fahrzeugspezifischen Informationen wie Fahrpläne und erwartete Verspätungen aufweisen.

In einem Ausführungsbeispiel ist die tragbare Orientierungshilfe mit dem Server verbindbar, z.B. über ein WLAN-Modul oder ein Mobilfunkstandard-kompatibles Modul, z.B. ein UMTS-Module oder ein LTE-Modul (die Anforderungen and die Datenrate sind aber sehr gering, so dass auch Module gemäß einem älteren Mobilfunkstandard verwendet werden können), um die individuelle Kennung des bzw. der Türbereiche des bzw. der Fahrzeuge sowie optionale weitere Informationen, z.B. zu Fahrplänen der Fahrzeuge, abzurufen. Dies ermöglicht es dem Nutzer, die relevanten aktuellen Daten einer Fahrzeugflotte bei Bedarf abzurufen.

In einem weiteren Ausführungsbeispiel ist das Fahrzeug, typischerweise ein Computer des Fahrzeugs, mit dem Server verbindbar. In diesem Ausführungsbeispiel können die zusätzlichen Informationen dem Nutzer über den Sender des Türbereichs zur Verfügung gestellt werden.

Das Passagierleitsystem kann aber auch ohne einen Server betrieben werden.

Typischerweise werden für das Passagierleitsystem fahrzeugseitig Bluetooth-Hotspots und als tragbare Orientierungshilfe Smartphones verwendet.

Zum einen müssen von den sehbehinderten oder blinden Fahrgästen keine spezielle, ggf. teuere Hardware erworben werden. Zum anderen ist die Aussicht auf eine globale Standardisierung dieser Ausführung besonders gut, was eine Ländergrenzen überwindende Lösung vereinfacht.

Die vorstehend beschriebenen Ausführungsformen können beliebig miteinander kombiniert werden.

### Kurzbeschreibung der Figuren

Die beiliegenden Zeichnungen veranschaulichen Ausführungsformen und dienen zusammen mit der Beschreibung der Erläuterung der Prinzipien der Erfindung. Die Elemente der Zeichnungen sind relativ zueinander und nicht notwendigerweise maßstabsgetreu.

Gleiche Bezugszeichen bezeichnen entsprechend ähnliche Teile.

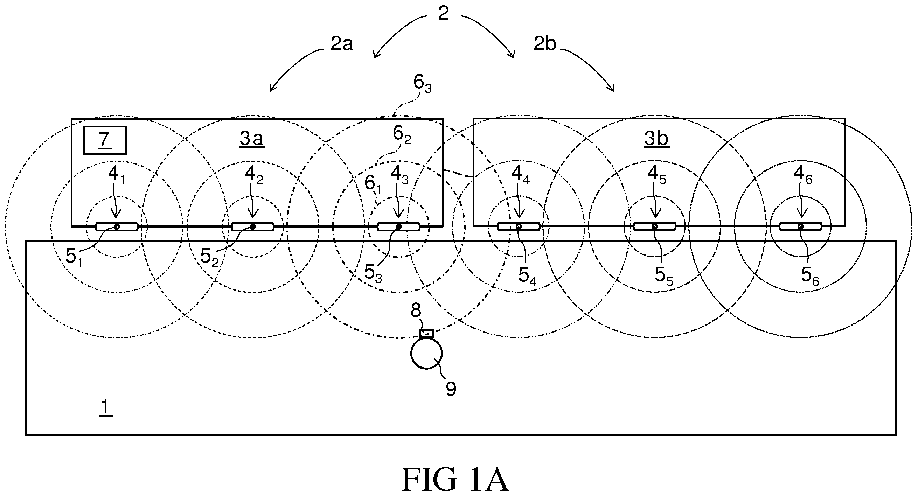

Figur 1A zeigt eine schematische Aufsicht auf ein Fahrzeug zur Personenbeförderung und einen Wartebereich, in dem ein Passagier mit einer tragbare Orientierungshilfe wartet, gemäß einer Ausführungsform.

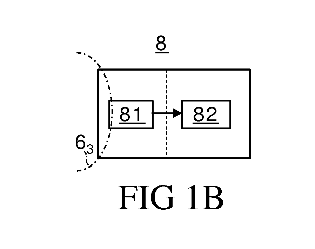

Figur 1B zeigt eine schematische Darstellung einer tragbaren Orientierungshilfe gemäß einer Ausführungsform.

### Ausführungsbeispiele

Figur 1A zeigt eine schematische Aufsicht auf ein Fahrzeug 2 zur Personenbeförderung, dass vor einem Wartebereich 1, z.B. einem Bahnsteig, hält, um Passagieren das Ein- bzw. Austeigen zu ermöglichen.

In dem in Fig. 1A dargestellten exemplarischen Ausführungsbeispiel handelt es sich um einen Personenzug mit zwei exemplarischen Wagen 2a, 2b, die über einen jeweiligen Innenraum 3a, 3b zur Aufnahme von Passagieren verfügen. Die Innenräume 3a, 3b können über jeweils drei exemplarische Türbereiche 4₁ bis 4₆ betreten und verlassen werden.

In jedem der Türbereiche 4₁ bis 4₆ ist ein jeweiliger Sender 5₁-5₆ angeordnet, der ein elektromagnetisches Signal aussenden kann, in dem eine individuelle Kennung des Senders 5₁-5₆ und damit des zugehörigen Türbereichs 4₁-4₆ kodiert ist.

Da der Personenzug in Fig. 1A einstiegsbereit ist, senden die Senders 5₁-5₆ elektromagnetisches Signale mit ihrer jeweiligen individuelle Kennung aus, was in Fig. 1A durch unterschiedliche gestrichelte Kreise bzw. Strich-Punkt-Kreise dargestellt wird. Dabei können die konzentrisch um einen jeweiligen Sender 5₁-5₆ angeordneten Kreise eines Linientyps jeweils einer Kurve gleicher Signalstärke entsprechen, die mit wachsendem Abstand vom jeweiligen Sender 5₁-5₆ abfällt. Aus Gründen der Übersichtlichkeit sind in Fig. 1A nur die das vom Sender 5₃ ausgesandte elektromagnetisches Signal symbolisierenden Kreise mit Bezugszeichen 6₁ bis 6₃ versehen.

Im Wartebereich 1 wartet eine sehbehinderte oder blinde Person 9, die mit einer tragbaren Orientierungshilfe 8 ausgerüstet ist, die schematisch in Fig. 1B dargestellt wird. Aus Gründen der Übersichtlichkeit ist auch auf eine Darstellung weiterer typischerweise vorhandenen Personen im Wartebereich 1 bzw. im Zug 2 verzichtet worden.

Die tragbare Orientierungshilfe 8 verfügt über eine Empfangs- und Steuereinheit 81, die die elektromagnetisches Signale 6₃ der Sender 5₁-5₆ des Fahrzeugs 2 detektieren kann und die die in dem jeweiligen elektromagnetischen Signal 6₃ kodierte individuelle Kennung der Türbereiche des Fahrzeugs 2 dekodieren kann, im exemplarischen Ausführungsbeispiel die Kennung der der Orientierungshilfe 8 nächstgelegen Tür 4₃, da die Signalstärke des Signals 6₃ des Senders 4₃ am Ort der Orientierungshilfe 8 am stärksten ist und daher von der tragbaren Orientierungshilfe 8 typischerweise ausgewählt wird.

Die Empfangs- und Steuereinheit 81 ist mit einer Ausgabeeinheit 82 verbunden, die sie zum Ausgeben eines Signals veranlassen kann, das den auf das Fahrzeug wartenden (potentiellen) Passagier auf den einstiegsbereiten Türbereich 4₃ hinweist.

Typischerweise werden die Sender 5₁-5₆ von einem jeweiligen Bluetooth-Hotspot bereitgestellt und die Empfangs- und Steuereinheit 81 weist eine BlueTooth-fähige Empfangseinheit, typischerweise ein Bluetooth-Modul auf, das eine bidirektionale Verbindung mit den Bluetooth-Hotspots 5₁-5₆ aufbauen kann.

In diesem Ausführungsbeispiel ist jeder Türbereich 4₁-4₆ des Fahrzeugs mit einem Bluetooth-Hotspot 5₁-5₆ ausgestattet, der eine eigene individuelle Kennung hat, die spezifisch kodiert für den jeweiligen Türbereich 4₁-4₆ ist.

Die Sendeleistung der Bluetooth-Hotspot 5₁-5₆ kann innerhalb geringer Toleranzen von maximal einigen Prozent identisch sein. Dies ermöglicht eine einfach und zuverlässige Entfernungsbestimmung zwischen der Orientierungshilfe 8 und den Bluetooth-Hotspot 5₁-5₆ mittels einer Messung der lokalen Signalstärke und Modelannahmen zum Signalstärkeverlauf.

Jeder Bluetooth-Hotspot 5₁-5₆ wird typischerweise mittig über dem jeweils zugeordneten Türbereich 4₁-4₆ angeordnet. Dies ermöglicht es, den Passagier mittig vor den ausgewählten Türbereich 4₁-4 zu führen.

Bei freigegebenen Türen bzw. Türbereichen 4₁-4₆ und stehendem Fahrzeug 2 wird von den Bluetooth-Hotspots 5₁-5₆ ein jeweiliges Signal gesendet, das von der BlueTooth-fähigen Empfangseinheit empfangen werden kann.

Wird die Freigabe für die Türen bzw. Türbereichen 4₁-4₆ zurückgenommen, wird typischerweise auch das Aussenden der Signale der Bluetooth-Hotspots 5₁-5₆ deaktiviert.

Bei der tragbare Orientierungshilfe 8 handelt es sich um einen PDA oder ein Smartphone. Aus Gründen der Einfachheit wird die tragbare Orientierungshilfe 8 im Folgenden mit Bezug zu einem Smartphone als Orientierungshilfe weiter erläutert.

Auf dem Smartphone 8 wird typischerweise eine spezielle App ausgeführt, die die elektromagnetischen Feldstärken der sendenden Bluetooth-Hotspots 5₁-5₆ erfasst und auswertet, um den wartenden Passagier 9 auf einen der freigegebenen Türbereiche 4₁-4₆, typischerweise den nächstgelegenen 4₃, hinzuweisen und ihn dahin zu führen.

So kann ein sehbehinderten oder blinden Träger 9 des Smartphones 8 über wahlweise akustische Signale und / oder Vibrationssignale der Weg zu einem der freigegebenen Türbereiche 4₁-4₆ gewiesen werden.

Dabei kann, ähnlich wie bei Einparkhilfen aus dem Automotiv-Bereich, dem Sehbehinderten 9 durch eine kürzer werdende Signalfolge die Verringerung der Distanz zum Türbereich 4₃ zur Kenntnis gegeben werden.

Um die beschriebene Funktionalität als Orientierungshilfe bereitzustellen kann die App in einer ersten Phase die Feldstärken der Sendesignale der Hotspots 5₁-5₆ messen.

In einer zweiten Phase kann der Türbereich 4₃ bzw. Bluetooth-Hotspots 5₃ mit der höchsten Feldstärke am Standort (Ausgangspunkt) des Sehbehinderten 9 ermittelt werden.

In einer dritten Phase kann der Sehbehinderte 9 durch Ausgabe eines entsprechenden Signals auf den ausgewählten Türbereich 4₃ aufmerksam gemacht werden. Der Sehbehinderte 9 kann sich dann auf den Weg zum ausgewählten Türbereich 4₃ begeben.

In einer vierten Phase können akustische und/oder vibrierende Signale entsprechend der vom Smartphone 8 lokal gemessenen Signalstärke des ausgewählten Bluetooth-Hotspots 5₃ ausgegeben werden. Beispielsweise wird bei steigender Signalstärke (durch Annäherung an den ausgewählten Bluetooth-Hotspots 5₃) eine Signalfolge mit kürzer werdenden Signalabständen ausgegeben, während bei fallender Signalstärke die Signalabstände verlängert werden.

In einer fünften Phase kann beim Erreichen des ausgewählten Türbereichs 4₃ vom Smartphone 8 ein Dauersignal ausgegeben werden.

In einer sechsten Phase kann bei Deaktivierung der Türbereichsfreigabe durch einen Fahrer typischerweise über eine mit den Sendern 5₁-5₆ verbundene Steuerung 7 des Fahrzeugs 2 das Ausgeben des Signals vom Smartphone 8 ebenfalls deaktiviert werden.

Bei dem Fahrzeug 2 kann es sich aber auch um ein autonomes Fahrzeug handeln. In diesem Ausführungsbeispiel kann die Steuerung 7 die Kontrolle der Türbereiche 4₁-4₆ und deren Sender 5₁-5₆ vollständig übernehmen und bspw. die Sender 5₁-5₆ bei geschlossenem oder sich schließenden Türbereich 4₁-4₆ sowie während einer Fahrt des Fahrzeugs 2 deaktivieren, und während eines Halts des Fahrzeugs 2 bei geöffneten oder sich öffnenden Türbereichen 4₁-4₆ zum Aussenden des jeweiligen elektromagnetischen Signals veranlassen.

Während der Phasen 1 bis 6 werden vom Smartphone 8 typischerweise alle anderen Bluetooth-Signale, die von Geräten von Fahrgästen und Passanten ausgesendet werden, ignoriert.

Das Design der vom Smartphone 8 auszugebenden Signale kann nach Vorgabe oder Absprache mit Behindertenverbänden definiert und entsprechend implementiert werden.

Die App kann zudem so konfiguriert sein, dass sie automatisch nach Einschaltung des Smartphones 8 aktiviert ist.

Das Smartphone 8 kann mit Hilfe von handelsüblichem Zubehör am Körper des Sehbehinderten 9 mitgeführt werden. Gute Übertragung des Vibrationssignales zum Körper bieten Sportarmbänder, so dass das Gerät nicht in den Händen gehalten werden muss.

Werden vom Smartphone 8 akustische Signale zum Führen verwendet, so können diese über einen In-Ohr-Kopfhörer auf ein Ohr ausgegeben werden. Dadurch können die akustische Signale zuverlässig an den Sehbehinderten 9 übermittelt werden, ohne dass andere Personen gestört werden.

Wenngleich hierin spezifische Ausführungsformen dargestellt und beschrieben worden sind, liegt es im Rahmen der vorliegenden Erfindung, die gezeigten Ausführungsformen geeignet zu modifizieren, ohne vom Schutzbereich der vorliegenden Erfindung abzuweichen.

### Bezugszeichenliste

- 1: Bahnsteig, Wartebereich
- 2, 2a, 2b: Fahrzeug, Wagen
- 3a, 3b: Innenraum
- 4₁-4₆: Türbereich
- 5₁-5₆: elektromagnetischer Sender
- 6₁-6₃: Isolinie (Kurve gleicher Leistung)
- 7: Steuerung
- 8: tragbare Orientierungshilfe (Mobiltelefon, PDA)
- 9: Person

## Patentansprüche

1. Fahrzeug (2) zur Beförderung von Passagieren (9), aufweisend:
- einen Innenraum (3a, 3b) zur Aufnahme der Passagiere (9); und
- mehrere Türbereiche (4₁-4₆) zum Betreten und Verlassen des Innenraums (3a, 3b), wobei
in und /oder an jedem der Türbereiche (4₁-4₆) ein jeweiliger Sender (5₁-5₆) angeordnet ist, der eingerichtet ist, ein elektromagnetisches Signal auszusenden, in dem eine individuelle Kennung des Türbereichs (4₁-4₆) und eine Sendeleistung des Senders (5₁-5₆) kodiert sind.

2. Fahrzeug (2) nach Anspruch 1, wobei der Sender (5₁-5₆) in einer Aufsicht mittig im Türbereich (4₁-4₆) angeordnet ist.

3. Fahrzeug (2) nach Anspruch 1 oder 2, wobei der Sender (5₁-5₆) ein elektromagnetischer Sender im Radiofrequenzbereich, ein Bluetooth-Sender und / oder ein WLAN-Sender ist.

4. Fahrzeug (2) nach einem der vorangehenden Ansprüche, wobei im elektromagnetischen Signal weiter eine Fahrzeugkennung kodiert ist; wobei im elektromagnetischen Signal weiter ein Öffnungszustand des jeweiligen Türbereichs (4₁-4₆) kodiert ist, und/oder wobei das Fahrzeug (2) mehrere Wagen (2a, 2b) aufweist und im elektromagnetischen Signal weiter eine Wagenkennung kodiert ist.

5. Fahrzeug (2) nach einem der vorangehenden Ansprüche, weiter umfassend eine Steuerung (7), die mit den Sendern (5₁-5₆) verbunden ist, und eingerichtet ist, die Sender (5₁-5₆) bei geschlossenem oder sich schließenden Türbereichen (4₁-4₆) zu deaktivieren, die Sender (5₁-5₆) während einer Fahrt des Fahrzeugs (2) zu deaktivieren, die Sender (5₁-5₆) bei geöffnetem oder sich öffnenden Türbereichen (4₁-4₆) zum Aussenden des jeweiligen elektromagnetischen Signals zu veranlassen, und/oder die Sender (5₁-5₆) während eines Halts des Fahrzeugs (2) zum Aussenden des jeweiligen elektromagnetischen Signals zu veranlassen.

6. Fahrzeug (2) nach einem der vorangehenden Ansprüche, wobei die Sendeleistungen der Sender (5₁-5₆) um weniger als 5% voneinander abweichen.

7. Fahrzeug (2) nach einem der vorangehenden Ansprüche, wobei das Fahrzeug (2) ein Bus oder ein Schienenfahrzeug ist.

8. Tragbare Orientierungshilfe (8), aufweisend:
- eine Ausgabeeinheit (82); und
- eine mit der Ausgabeeinheit (82) verbundene Empfangs- und Steuereinheit (81), die eingerichtet ist, ein elektromagnetisches Signal eines Fahrzeugs (2) zu detektieren, eine in dem elektromagnetisches Signal kodierte individuelle Kennung eines Türbereichs (4₁-4₆) des Fahrzeugs (2) zu dekodieren, und nach dem Dekodieren der individuellen Kennung die Ausgabeeinheit (82) zum Ausgeben eines Signals zu veranlassen, das eine auf das Fahrzeug wartenden Person auf den Türbereich (4₁-4₆) mit der individuellen Kennung hinweist, wobei die Empfangs- und Steuereinheit (81) eingerichtet ist, durch ein Auswerten des detektierten elektromagnetischen Signals eine Entfernung zu dem Türbereich (4₁-4₆) mit der individuellen Kennung zu ermitteln.

9. Tragbare Orientierungshilfe (8) nach Anspruch 8, wobei die Ausgabeeinheit (82) eingerichtet ist, akustische Signale und/oder Vibrationssignale auszugeben.

10. Tragbare Orientierungshilfe (8) nach Anspruch 8 oder 9, wobei die Empfangs- und Steuereinheit (81) eingerichtet ist, einen nächstgelegenen Türbereichs (4₁-4₆) von mehreren Türbereichen (4₁-4₆) des Fahrzeugs (2) zu ermitteln.

11. Tragbare Orientierungshilfe (8) nach einem der Ansprüche 8 bis 10, wobei die Empfangs- und Steuereinheit (81) eingerichtet ist, durch das Auswerten des detektierten elektromagnetischen Signals eine Richtung zum Türbereich (4₁-4₆) zu ermitteln, und/oder wobei das Auswerten des detektierten elektromagnetischen Signals ein Bestimmen einer Stärke des detektierten elektromagnetischen Signals umfasst.

12. Tragbare Orientierungshilfe (8) nach einem der Ansprüche 8 bis 11, wobei das Auswerten des elektromagnetischen Signals ein Bestimmen eines Gradienten und/oder einer Differenz einer Stärke des detektierten elektromagnetischen Signals umfasst.

13. Tragbare Orientierungshilfe (8) nach einem der Ansprüche 8 bis 12, wobei die Empfangs- und Steuereinheit (81) ein Bluetooth-Modul und / oder ein WLAN-Modul aufweist.

14. Tragbare Orientierungshilfe (8) nach einem der Ansprüche 8 bis 13, wobei die tragbare Orientierungshilfe ein persönlicher digitaler Assistent oder ein Smartphone aufweisend einen Sensor für das elektromagnetische Signal des Fahrzeugs (2) und eine Anwendungssoftware, die auf einen Datenstrom des Sensors zugreifen und darin die individuelle Kennung des Türbereichs (4₁-4₆) dekodieren kann, aufweist.

15. Passagierleitsystem aufweisend ein Fahrzeug (2) nach einem der Ansprüche 1 bis 7, und eine tragbare Orientierungshilfe (8) nach einem der Ansprüche 8 bis 14.

## Claims

1. Vehicle (2) for conveying of passengers (9), the vehicle comprising:
- an interior space (3a, 3b) for accommodating the passengers (9); and
- a plurality of door areas (4₁-4₆) for entering and leaving the interior space (3a, 3b),
wherein a respective transmitter (5₁-5₆) is arranged in and/or at each of the door areas (4₁₋4₆), the transmitter (5₁-5₆) being configured to transmit an electromagnetic signal in which an individual identification of the door area (4₁-4₆) and a transmission power of the transmitter (5₁-5₆) are encoded.

2. The vehicle (2) according to claim 1, wherein the transmitter (5₁-5₆) is arranged centrally in the door area (4₁-4₆) viewed from above.

3. The vehicle (2) according to claim 1 or 2, wherein the transmitter (5₁-5₆) is an electromagnetic transmitter in the radio frequency range, a Bluetooth transmitter and/or a WLAN transmitter.

4. The vehicle (2) according to any of the preceding claims, wherein a vehicle identification is further encoded in the electromagnetic signal, wherein an opening state of the respective door area (4₁-4₆) is further encoded in the electromagnetic signal, and/or wherein the vehicle (2) comprises several carriages (2a, 2b) and a carriage identification is further encoded in the electromagnetic signal.

5. The vehicle (2) according to any of the preceding claims, further comprising a controller (7) connected to the transmitters (5₁-5₆) and configured to deactivate the transmitters (5₁-5₆) when the door areas (4₁-4₆) are closed or closing, to deactivate the transmitters (5₁-5₆) while the vehicle (2) is in motion, to cause the transmitters (5₁-5₆) to transmit the respective electromagnetic signal when the door areas (4₁-4₆) are open or opening, and/or to cause the transmitters (5₁-5₆) to transmit the respective electromagnetic signal during a stop of the vehicle (2).

6. Vehicle (2) according to any of the preceding claims, where the transmission powers of the transmitters (5₁-5₆) differ by less than 5%.

7. Vehicle (2) according to any of the preceding claims, wherein the vehicle (2) is a bus or a rail vehicle.

8. A portable orientation aid (8), comprising:
- an output unit (82); and
- a receiving and control unit (81) connected to the output unit (82), the receiving and control unit (81) being configured to detect an electromagnetic signal of a vehicle (2), to decode an individual identification of a door area (4₁-4₆) of the vehicle (2) encoded in the electromagnetic signal, and, after decoding of the individual identification, to cause the output unit (82) to output a signal that indicates the door area (4₁-4₆) with the individual identification to a person waiting for the vehicle, wherein the receiving and control unit (81) is configured to determine a distance to the door area (4₁-4₆) with the individual identification by evaluating the detected electromagnetic signal.

9. The portable orientation aid (8) according to claim 8, wherein the output unit (82) is configured to output acoustic signals and/or vibration signals.

10. The portable orientation aid (8) according to claim 8 or 9, wherein the receiving and control unit (81) is configured to determine a nearest door area (4₁-4₆) of a plurality of door areas (4₁-4₆) of the vehicle (2).

11. The portable orientation aid (8) according to any one of the claims 8 to 10, wherein the receiving and control unit (81) is configured to determine a direction to the door area (4₁-4₆) by evaluating the detected electromagnetic signal, and/or wherein the evaluating the detected electromagnetic signal comprises determining a strength of the detected electromagnetic signal.

12. The portable orientation aid (8) according to any one of the claims 8 to 11, wherein evaluating the electromagnetic signal comprises determining a gradient and/or a difference in a strength of the detected electromagnetic signal.

13. The portable orientation aid (8) according to any one of the claims 8 to 12, wherein the receiving and control unit (81) comprises a Bluetooth module and/or a WLAN module.

14. The portable orientation aid (8) according to any one of the claims 8 to 13, wherein the portable orientation aid is a personal digital assistant or a smartphone comprising a sensor for the electromagnetic signal of the vehicle (2) and application software capable of accessing a data stream of the sensor and decoding therein the individual identification of the door area (4₁-4₆).

15. A passenger guidance system comprising a vehicle (2) according to any one of the claims 1 to 7, and a portable orientation aid (8) according to any one of the claims 8 to 14.

## Revendications

1. Véhicule (2) destiné à transporter des passagers (9), présentant :
- un espace intérieur (3a, 3b) destiné à loger des passagers (9) ; et
- plusieurs zones de porte (4₁-4₆) pour entrer dans l'espace intérieur (3a, 3b) et le quitter, dans lequel
un émetteur (5₁-5₆), qui est conçu pour émettre un signal électromagnétique dans lequel sont codés un identifiant individuel de la zone de porte (4₁-4₆) et une puissance d'émission de l'émetteur (5₁-5₆), est disposé respectivement dans et/ou sur chacune des zones de porte (4₁-4₆).

2. Véhicule (2) selon la revendication 1, dans lequel l'émetteur (5₁-5₆) est disposé en vue de dessus de manière centrale dans la zone de porte (4₁-4₆).

3. Véhicule (2) selon la revendication 1 ou 2, dans lequel l'émetteur (5₁-5₆) est un émetteur électromagnétique dans le domaine des fréquences radio, un émetteur Bluetooth et/ou un émetteur WLAN.

4. Véhicule (2) selon l'une quelconque des revendications précédentes, dans lequel un identifiant de véhicule est codé en outre dans le signal électromagnétique ; dans lequel un état d'ouverture de la zone de porte (4₁-4₆) respective est codé en outre dans le signal électromagnétique, et/ou dans lequel le véhicule (2) présente plusieurs voitures (2a, 2b) et un identifiant de voiture est codé en outre dans le signal électromagnétique.

5. Véhicule (2) selon l'une quelconque des revendications précédentes, comprenant en outre une commande (7), qui est reliée aux émetteurs (5₁-5₆), et conçue pour désactiver les émetteurs (5₁-5₆) lorsque les zones de porte (4₁-4₆) sont fermées ou se ferment, désactiver les émetteurs (5₁-5₆) pendant un trajet du véhicule (2), déclencher les émetteurs (5₁-5₆) lorsque les zones de porte (4₁-4₆) sont ouvertes ou s'ouvrent pour l'émission du signal électromagnétique respectif, et/ou déclencher les émetteurs (5₁-5₆) pendant un arrêt du véhicule (2) pour l'émission du signal électromagnétique respectif.

6. Véhicule (2) selon l'une quelconque des revendications précédentes, dans lequel les puissances d'émission des émetteurs (5₁-5₆) diffèrent les unes des autres de moins de 5 %.

7. Véhicule (2) selon l'une quelconque des revendications précédentes, dans lequel le véhicule (2) est un bus ou un véhicule ferroviaire.

8. Aide à l'orientation portative (8), présentant :
- une unité de sortie (82) ; et
- une unité de réception et de commande (81), reliée à l'unité de sortie (82), qui est conçue pour détecter un signal électromagnétique d'un véhicule (2), décoder un identifiant individuel d'une zone de porte (4₁-4₆) du véhicule (2), codé dans le signal électromagnétique, et, après le décodage de l'identifiant individuel, déclencher l'unité de sortie (82) pour l'émission d'un signal, qui indique à une personne attendant le véhicule la zone de porte (4₁-4₆) avec l'identifiant individuel, dans laquelle l'unité de réception et de commande (81) est conçue pour déterminer, par une évaluation du signal électromagnétique détecté, un éloignement par rapport à la zone de porte (4₁-4₆) avec l'identifiant individuel.

9. Aide à l'orientation portative (8) selon la revendication 8, dans laquelle l'unité de sortie (82) est conçue pour émettre des signaux acoustiques et/ou des signaux de vibration.

10. Aide à l'orientation portative (8) selon la revendication 8 ou 9, dans laquelle l'unité de réception et de commande (81) est conçue pour déterminer une zone de porte (4₁-4₆) la plus proche parmi plusieurs zones de porte (4₁-4₆) du véhicule (2) .

11. Aide à l'orientation portative (8) selon l'une quelconque des revendications 8 à 10, dans laquelle l'unité de réception et de commande (81) est conçue pour déterminer, par l'évaluation du signal électromagnétique détecté, une direction par rapport à la zone de porte (4₁-4₆), et/ou dans laquelle l'évaluation du signal électromagnétique détecté comprend une détermination d'une force du signal électromagnétique détecté.

12. Aide à l'orientation portative (8) selon l'une quelconque des revendications 8 à 11, dans laquelle l'évaluation du signal électromagnétique comprend une détermination d'un gradient et/ou d'une différence d'une force du signal électromagnétique détecté.

13. Aide à l'orientation portative (8) selon l'une quelconque des revendications 8 à 12, dans laquelle l'unité de réception et de commande (81) présente un module Bluetooth et/ou un module WLAN.

14. Aide à l'orientation portative (8) selon l'une quelconque des revendications 8 à 13, dans laquelle l'aide à l'orientation portative présente un assistant numérique personnel ou un téléphone intelligent présentant un capteur pour le signal électromagnétique du véhicule (2) et un logiciel d'application, qui peut accéder à un flux de données du capteur et décoder dans celui-ci l'identifiant individuel de la zone de porte (4₁-4₆) .

15. Système de guidage de passagers présentant un véhicule (2) selon l'une quelconque des revendications 1 à 7, et une aide à l'orientation portative (8) selon l'une quelconque des revendications 8 à 14.
